(19) Europäisches Patentamt
European Patent Office
Office européen des brevets

(11) **EP 4 773 399 A1**

(12) **EUROPEAN PATENT APPLICATION**
published in accordance with Art. 153(4) EPC

(43) Date of publication:
**08.07.2026 Bulletin 2026/28**

(21) Application number: **24859749.4**

(22) Date of filing: **27.08.2024**

(51) International Patent Classification (IPC):
*H01M 50/477* (2021.01)    *H01M 10/052* (2010.01)
*H01M 10/0565* (2010.01)    *H01M 10/0566* (2010.01)
*H01M 10/0585* (2010.01)    *H01M 50/474* (2021.01)

(52) Cooperative Patent Classification (CPC):
**H01M 10/052; H01M 10/0565; H01M 10/0566;
H01M 10/0585; H01M 50/474; H01M 50/477;
Y02E 60/10**

(86) International application number:
**PCT/JP2024/030432**

(87) International publication number:
**WO 2025/047717 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 JP 2023141684**

(71) Applicant: **Panasonic Intellectual Property
Management Co., Ltd.
Kadoma-shi, Osaka 571-0057 (JP)**

(72) Inventor: **URATA, Sho
Osaka 571-0057 (JP)**

(74) Representative: **Eisenführ Speiser
Patentanwälte Rechtsanwälte PartGmbB
Postfach 10 60 78
28060 Bremen (DE)**

(54) **LITHIUM SECONDARY BATTERY**

(57) A lithium secondary battery (10) disclosed includes a positive electrode (11), a negative electrode (12), a separator (13) and a spacer (53) that are disposed between the positive electrode (11) and the negative electrode (12), and a nonaqueous electrolyte. The negative electrode (12) is an electrode on which lithium metal is deposited during charging, and from which the lithium metal dissolves during discharging. The positive electrode (11) includes a positive electrode current collector (11a) and a positive electrode mixture layer (11b) disposed on the positive electrode current collector (11a). A portion of the spacer (53) is embedded in the positive electrode mixture layer (11b).

FIG. 2

## Description

[Technical Field]

The present disclosure relates to a lithium secondary battery.

[Background Art]

Nonaqueous electrolyte secondary batteries are used in ICT applications such as personal computers and smartphones, in-vehicle applications, power storage applications, and the like. In such applications, nonaqueous electrolyte secondary batteries are required to have a higher capacity. Lithium-ion batteries are known as high-capacity nonaqueous electrolyte secondary batteries. Lithium-ion batteries can reach a high capacity by using, for example, graphite and an alloy active material such as a silicon compound in combination as a negative electrode active material. However, increases in the capacity of lithium-ion batteries are reaching a limit.

Lithium secondary batteries (lithium metal secondary batteries) are promising as nonaqueous electrolyte secondary batteries with high capacities that exceed those of lithium-ion batteries. In a lithium secondary battery, lithium metal is deposited on the negative electrode during charging, and this lithium metal dissolves in the nonaqueous electrolyte during discharging. Various proposals have been made for lithium secondary batteries.

Claim 1 of PTL 1 (Japanese Laid-Open Patent Publication No. H10(1998)-12279) describes "A metallic lithium secondary battery in which a negative electrode using lithium or a lithium alloy as a negative electrode active material and a positive electrode made of a chargeable and dischargeable substance are disposed facing each other with a separator interposed between the negative electrode and the positive electrode, wherein the metallic lithium secondary battery has a buffer space for accommodating lithium deposited on a surface of the negative electrode, between the negative electrode or the positive electrode and the separator".

Claim 1 of PTL 2 (International Publication No. 2020/066254) discloses "a lithium secondary battery including: a positive electrode including a positive electrode current collector and positive electrode mixture layer containing a positive electrode active material; a negative electrode including a negative electrode current collector facing the positive electrode; a separator disposed between the positive electrode and the negative electrode; and a nonaqueous electrolyte having lithium-ion conductivity, wherein the positive electrode active material includes a composite oxide containing lithium and a metal M other than lithium, the metal M includes at least a transition metal, lithium metal is deposited on the negative electrode during charging, the lithium metal dissolves from the negative electrode during discharging, a first length in a first direction D1 of the positive electrode current collector is smaller than a second length in a second direction D2 intersecting the first direction, spacers are provided between the positive electrode and the separator such that a space for accommodating the lithium metal is formed between the positive electrode and the negative electrode, and a straight line SL can be drawn along the first direction D1 to pass through three or more of the spacers".

[Citation List]

[Patent Literature]

PTL 1: Japanese Laid-Open Patent Publication No. H10(1998)-12279
PTL 2: International Publication No. 2020/066254

[Summary of Invention]

[Technical Problem]

It is possible to suppress the expansion of a battery by disposing a spacer between a positive electrode and a negative electrode. However, as a result of studies, the inventor of the present application found that the formation of spacers may result in deterioration in charge/discharge cycle characteristics. An object of the present disclosure is to provide a lithium secondary battery with small expansion during charging and a favorable charge/discharge cycle.

[Solution to Problem]

An aspect of the present disclosure relates to a lithium secondary battery including:

a positive electrode;

a negative electrode;

a separator and a spacer that are disposed between the positive electrode and the negative electrode; and

a nonaqueous electrolyte,

wherein the negative electrode is an electrode on which lithium metal is deposited during charging, and from which the lithium metal dissolves during discharging,

the positive electrode includes a positive electrode current collector and a positive electrode mixture layer disposed on the positive electrode current collector, and

a portion of the spacer is embedded in the positive electrode mixture layer.

[Advantageous Effects of Invention]

According to the present disclosure, it is possible to obtain a lithium secondary battery with small expansion during charging and favorable charge/discharge cycles.

Novel features of the present invention are set forth in the appended claims, but the present invention, both in terms of structure and content, together with other objects and features of the present invention, will be better understood from the following detailed description taken in conjunction with the drawings.

[Brief Description of Drawings]

FIG. 1 is a longitudinal cross-sectional view schematically showing an example of a lithium secondary battery according to an embodiment of the present disclosure.

FIG. 2 is a cross-sectional view schematically showing a portion of an exemplary electrode group.

FIG. 3 is a cross-sectional view schematically showing a portion of another exemplary electrode group.

FIG. 4 is a top view schematically showing an example of the spacer arrangement.

FIG. 5 is a top view schematically showing another example of the spacer arrangement.

FIG. 6 is a top view schematically showing another example of the spacer arrangement.

[Description of Embodiments]

Hereinafter, embodiments according to the present disclosure will be described by way of examples, but embodiments according to the present disclosure are not limited to the examples described below. In the following description, specific numeric values and materials may be given as examples, but other numeric values and materials may also be applied as long as the invention according to the present disclosure can be implemented. In this specification, the expression "numeric value A to numeric value B" includes numeric value A and numeric value B, and can be read as "numeric value A or more and numeric value B or less". In the following description, when a lower limit and an upper limit are given as examples of numeric values regarding specific physical properties, conditions, and the like, any of the exemplified lower limits can be combined with any of the exemplified upper limits in any combination, as long as the lower limit is not greater than or equal to the upper limit.

(Lithium Secondary Battery)

A lithium secondary battery according to this embodiment may be referred to as "lithium secondary battery (L)" below. The lithium secondary battery (L) includes a positive electrode, a negative electrode, a separator and a spacer that are disposed between the positive electrode and the negative electrode, and a nonaqueous electrolyte. The negative electrode is an electrode on which lithium metal is deposited during charging, and from which the lithium metal dissolves during discharging. The positive electrode includes a positive electrode current collector and a positive electrode mixture layer disposed on the positive electrode current collector. A portion of the spacer is embedded in the positive electrode mixture layer. The portion may be referred to as "portion (Pp)" below.

In the lithium secondary battery (L), the space between the positive electrode and the negative electrode is secured by a spacer. Therefore, the expansion of the electrode group in the stacking direction by lithium metal deposited on the negative electrode during charging is suppressed. On the other hand, the inventor of the present application found that the formation of a spacer may result in deterioration in charge/discharge cycle characteristics. As a result of further studies, the inventor of the present application found that deterioration in charge/discharge cycle characteristics can be suppressed by causing a portion of the spacer to be embedded in the positive electrode mixture layer. The present disclosure is based on this new finding.

In general, a film is formed on the surface of the positive electrode mixture layer of a lithium secondary battery. The formation of this film is accompanied with the decomposition of a nonaqueous electrolyte. When the formed film is destroyed, the decomposition of the nonaqueous electrolyte progresses due to the formation of a new film, and as a result, the charge/discharge cycle characteristics deteriorate. Therefore, it is necessary to avoid the breakage of the film formed on the surface of the positive electrode mixture layer.

During charging and discharging, the positive electrode expands and contracts in a direction orthogonal to its stacking direction. When the spacer is not embedded in the positive electrode mixture layer, the expansion and contraction of the positive electrode cause strong friction between a portion where the spacer is present and the positive electrode. As a result, it is conceivable that the film present on the surface of the positive electrode mixture layer is broken. When the film is broken, as described above, the decomposition of the nonaqueous electrolyte proceeds. On the other hand, in the lithium secondary battery (L), the spacer is embedded in the positive electrode mixture layer, which can suppress the breakage of the film on the surface of the positive electrode mixture layer. Therefore, according to the lithium secondary battery (L), favorable charge/discharge cycle characteristics can be maintained. As described above, expansion of the lithium secondary battery (L) is small during charging, and the lithium secondary battery has a favorable charge/discharge cycle characteristic.

A depth Dp (or an average depth Dpa) to which a portion (Pp) is embedded in the positive electrode mixture layer may be 0.5 $\mu$m or more, 3.0 $\mu$m or more, or 5.0 $\mu$m or more. A high effect can be obtained by setting the depth Dp (or the average depth Dpa) to 0.5 $\mu$m or more. From the viewpoint of ease of production and the like, the depth Dp (or the average depth Dpa) is preferably 3% or less of a thickness Tp of the positive electrode mixture layer. Here, when the positive electrode mixture layer is formed on both sides of the positive electrode current collector, the thickness Tp of the positive electrode mixture layer is the thickness of one positive electrode mixture layer formed on one side of the positive electrode current collector.

The depth Dp (or the average depth Dpa) may be 10 $\mu$m or less, or 5.0 $\mu$m or less. Damage to the positive electrode can be suppressed by setting the depth Dp (or the average depth Dpa) to 5.0 $\mu$m or less. In addition, by setting the depth Dp (or the average depth Dpa) to 5.0 $\mu$m or less, it is possible to suppress a decrease in output due to the discharge of nonaqueous electrolyte in the positive electrode mixture layer in the portion where the spacer is present. When an electrode group is a rolled-up type electrode group, the circularity of a cross section of the electrode group can be increased by setting the depth Dp (or the average depth Dpa) to 5.0 $\mu$m or more. The depth Dp (or the average depth Dpa) may be in a range of 0.5 to 10 $\mu$m, in a range of 3.0 to 10 $\mu$m, or in a range of 5.0 to 10 $\mu$m. In these ranges, the upper limit may be 5.0 $\mu$m, as long as the lower limit is not greater than or equal to the upper limit.

The average depth Dpa can be determined by the following procedure. First, any five positions at which the portion (Pp) is embedded in the positive electrode mixture layer are selected, and the depth Dp to which the portion (Pp) is embedded in the positive electrode mixture layer at each position is measured. The average depth Dpa is obtained by arithmetically averaging the five measured depths Dp. The depth Dp can be measured in a manner described in Working Examples.

The spacer is disposed between the separator and the positive electrode. Therefore, the spacer is in contact with and is embedded in the positive electrode mixture layer.

The negative electrode of the lithium secondary battery (L) includes a negative electrode base foil. A portion of the separator that is in contact with the spacer may be or may not be embedded in the negative electrode base foil. The portion may be referred to as "portion (Pn)" below. It is preferable that the portion (Pn) of the spacer is not embedded in the negative electrode base foil because it is difficult for the spacer to move as the negative electrode expands. On the other hand, when the portion (Pn) is embedded in the negative electrode base foil, it is possible to inhibit lithium metal from being deposited between the separator and the negative electrode base foil during charging. As a result, it is possible to suppress expansion of the electrode group during charging.

A depth Dn (or an average depth Dna) to which the portion (Pn) is embedded in the negative electrode base foil may be 0.5 $\mu$m or more, 1.0 $\mu$m or more, or 2.0 $\mu$m or more. In particular, expansion of the electrode group during charging can be suppressed by setting the depth Dn (or the average depth Dna) to 0.5 $\mu$m or more. The depth Dn and the average depth Dna can be determined using methods similar to those for the depth Dp and the average depth Dpa.

A method for causing the portion (Pp) to be embedded in the positive electrode mixture layer and a method for causing the portion (Pn) to be embedded in the negative electrode base foil are not limited, but it is possible to use a method described later as an example of the manufacturing method (M).

There is no particular limitation on the shape of the lithium secondary battery (L), and examples of the shape of the lithium secondary battery (L) include a cylindrical shape, a coin shape, a square shape, a sheet shape, and a flat shape. There is no particular limitation on a form of the electrode group, and the electrode group may be a rolled-up type electrode group or a stacked-type electrode group.

(Method for Manufacturing Lithium Secondary Battery)

A manufacturing method (M), which is an example of the method for manufacturing a lithium secondary battery (L), will be described below. However, the lithium secondary battery (L) may be formed using a method other than the manufacturing method (M) described below. The items described regarding the lithium secondary battery (L) are applicable to the manufacturing method (M). The items described regarding the manufacturing method (M) may be applied to the lithium secondary battery (L).

The manufacturing method (M) includes a step (i), a step (ii), and a step (iii) in the stated order. Each step will be described below.

The step (i) is a step of forming a spacer on a separator. There is no particular limitation on a method for forming a spacer, and the spacer may be formed using a known method. For example, the spacer may be formed by applying a spacer material onto a predetermined member (a separator) and then drying the material. The spacer material may be applied using a dispenser, may be applied using a known printing method such as a gravure printing method, an inkjet printing method, or a screen printing method, or may be applied using other methods. In addition, the spacer may be formed on the negative electrode. In that case, in the step (ii), a stacked body is formed such that the separator is disposed between the spacer and the positive electrode and the positive electrode and the separator come into contact with each other. When the spacer is formed on the negative electrode, a portion of the separator that is in contact with the spacer may be embedded in the positive electrode mixture layer. Alternatively, when the spacer is formed on the negative electrode, a portion of the separator that is in contact with the spacer and a portion of the spacer may be embedded in the positive electrode mixture layer. In both cases, it is possible to suppress the breakage of the film formed on the surface of the positive electrode mixture layer.

The step (ii) is a step of forming a stacked body (an electrode group) including a positive electrode, a negative electrode, a separator, and a spacer. The separator and the spacer are disposed between the positive electrode and the negative electrode (the negative electrode base foil). The stacked body is formed such that the positive electrode and the spacer come into contact with each other. The stacked body may be a rolled-up body formed by rolling up the positive electrode, the negative electrode, and the separator such that the separator and the spacer are disposed between the positive electrode and the negative electrode (the negative electrode base foil). In the rolled-up body, the positive electrode, the negative electrode, and the separator are stacked in a radial direction of the rolled-up body. The rolled-up body can be formed using a band-shaped positive electrode, a band-shaped negative electrode, and a band-shaped separator.

The stacked body may be a stacked body formed by stacking flat positive electrodes, flat negative electrodes (negative electrode base foils), and flat separators in one direction. In this case, the positive electrodes and the negative electrodes are disposed alternately, and each separator is disposed between a positive electrode and a negative electrode.

In the step (ii), the stacked body is formed such that the portion (Pp) is embedded in the positive electrode mixture layer. For example, when forming a rolled-up body, the rolled-up body may be formed while pulling the electrode plates (the positive electrode, the negative electrode) and/or the separator at a tension higher than usual tension. Alternatively, in the step (ii), the rolled-up body may be formed while pressing the rolled-up body being formed around the rolling-up shaft with a roller. At this time, the portion (Pp) can be embedded in the positive electrode mixture layer by pressing the rolled-up body using the roller at a force higher than usual force. Alternatively, the step (ii) may include a step (iiA) of forming a stacked body by stacking the positive electrodes, the negative electrodes (the negative electrode base foils), and the separators in one direction, and a step (iiB) of causing the portions (Pp) to be embedded in the positive electrode mixture layer by pressing the stacked body. In the step (ii), when the portion (Pp) is caused to be embedded in the positive electrode mixture layer, the portion (Pn) can be caused to be embedded in the negative electrode base foil.

Alternatively, the step (ii) may include a step (iia) of forming a stacked sheet in which the portion (Pp) is embedded in the positive electrode mixture layer by stacking and pressing the separator on which the spacer is formed and the positive electrode, and a step (iib) of forming a stacked body using the stacked sheet and the negative electrode. In the step (iia), if necessary, separators are disposed on both sides of the positive electrode to form a stacked sheet. In the step (iib), the stacked body may be formed by rolling up the stacked sheet and the negative electrode, or by stacking the stacked sheet and the negative electrode in one direction.

In step (ii), an embedded depth Dp (or an average depth Dpa) can be increased by increasing the tension of pulling the electrode plates (the positive electrode, the negative electrode) and/or the separator or by increasing the pressure of pressing the stacked sheet (or the stacked body). When the portion (Pp) is caused to be embedded in the positive electrode mixture layer by the tension of pulling the electrode plates and/or the separator, the tension of pulling the electrode plates and/or the separator may be 10 mN/mm or more (for example, 15 mN/mm or more). The tension may be in a range of 10 to 90 mN/mm (for example, in a range of 20 to 80 mN/mm). The tension applied to achieve a predetermined embedded depth Dp (or an average depth Dpa) can be changed as appropriate according to the shape and strength of the spacer, the hardness of the positive electrode mixture layer, and the like. Here, the tension (mN/mm) indicates the pulling force per 1 mm width of an electrode plate (or a separator).

The step (iii) is the step of accommodating the stacked body formed in the step (ii) and a nonaqueous electrolyte in an exterior body. There is no particular limitation on a method for carrying out the step (iii), and a known method may be used. As described above, the lithium secondary battery (L) can be manufactured.

Hereinafter, examples of each constituent element of the lithium secondary battery (L) will be specifically described. Note that constituent elements described below are merely examples, and constituent elements of the lithium secondary battery (L) according to this embodiment are not limited to the following constituent elements. Known constituent elements may be used for constituent elements other than portions that are characteristic of the present embodiment.

The lithium secondary battery (L) is also referred to as a "lithium metal secondary battery". At the negative electrode of the lithium secondary battery (L), lithium metal is deposited during charging and the lithium metal dissolves during discharging. The negative electrode includes a negative electrode base foil. Lithium metal is deposited on the negative electrode base foil during charging.

In the lithium secondary battery (L), for example, 70% or more of the rated capacity is developed by the deposition and dissolution of lithium metal. The movement of electrons at the negative electrode during charging and discharging is mainly due to the deposition and dissolution of lithium metal at the negative electrode. Specifically, 70% to 100% (e.g., 80% to 100% or 90% to 100%) of the movement of electrons (in other words, current) at the negative electrode during charging and discharging is due to the deposition and dissolution of lithium metal. In other words, the negative electrode according to the present disclosure differs from the negative electrode in which the movement of electrons in the negative electrode during charging and discharging is mainly due to the absorption and release of lithium ions by the negative electrode active material (such as graphite).

(Separator)

There is no particular limitation on the separator, and any separator used in known lithium secondary batteries may be used. A porous sheet having ion permeability and insulating properties can be used for the separator. Examples of the porous sheet include a porous membrane, a woven fabric, and a nonwoven fabric. The material of the separator is not particularly limited, but may be a polymer material. Examples of the polymer material include polyolefin resin, polyamide resin, cellulose, and the like. Examples of the polyolefin resin include polyethylene, polypropylene, and copolymers of ethylene and propylene. The separator may also contain additives as necessary. Examples of the additives include inorganic fillers. The separator may include the above porous sheet and a heat-resistant layer formed on the porous sheet.

The thickness of the separator is not particularly limited and is selected depending on a configuration of the lithium secondary battery (L). The thickness of the separator may be 6 $\mu$m or more or 9 $\mu$m or more, and 40 $\mu$m or less or 20 $\mu$m or less.

(Spacer)

The spacer is formed on one or both sides of a predetermined member (a positive electrode or a separator), depending on the configuration of the battery. When the spacers are formed on the positive electrode, the spacers are usually formed on both sides of the positive electrode. When the spacer is formed on the separator, the spacer is usually formed on one side of the separator.

The spacer contains an insulating polymer (e.g., an insulating resin). The spacer may be made of only an insulating polymer, or may be made of an insulating polymer and particles (filler). The percentage of the insulating polymer in the spacer may be 10% by volume or more, 30% by volume or more, or 50% by volume or more, and 100% by volume or less, or 80% by volume or less.

There is no particular limitation on the insulating polymer that forms the spacer. Examples of the insulating polymer that forms the spacer include polyolefin, acrylic resin, polyamide, polyimide, polyamide imide, silicone resin, fluorine-containing resin, epoxy resin, cellulose derivatives, and rubber. Examples of the polyolefin include polyethylene, polypropylene, and copolymers thereof. Examples of the fluorine-containing resin include polyvinylidene fluoride and polytetrafluoroethylene. Examples of the polyamide include wholly aromatic polyamide (aramid). Examples of the rubber include vinylidene fluoride-tetrafluoroethylene copolymers, ethylene-tetrafluoroethylene copolymers, styrenebutadiene rubber, acrylonitrile rubber, and acrylonitrile-acrylic ester copolymers.

Among the above polymers, polyimide, polyvinylidene fluoride, acrylonitrile-acrylic ester copolymers, and the like are preferable because lithium ions do not permeate through these polymers. The spacer may contain polyimide.

Insulating particles can be used as particles (filler). Particles may be inorganic or organic particles. Examples of inorganic particles include insulating inorganic particles of metal oxides, metal hydroxides, metal nitrides, metal carbides, metal sulfides, and the like. Specifically, examples of the insulating particles include particles of aluminum oxide, magnesium oxide, titanium oxide, zirconium oxide, silicon oxide, silicon nitride, aluminum nitride, titanium nitride, and silicon carbide.

When the spacer contains an insulating polymer and particles, the content of the particles in the spacer may be 10% by mass or more, or 50% by mass or more, and 90% by mass or less, 80% by mass or less, or 50% by mass or less. By setting the content of the particles in the spacer to 50% by mass or more, the strength of the spacer can be readily ensured.

An average height Hs of the spacer varies depending on the design of the battery, and may be in a range of 10 $\mu$m to 100 $\mu$m (e.g., in a range of 20 $\mu$m to 70 $\mu$m), depending on the battery design. When the spacer is linear, the width of the linear spacer may be in a range of 50 $\mu$m to 1000 $\mu$m (e.g., in a range of 250 $\mu$m to 750 $\mu$m).

The average height Hs of the spacer can be measured using the following method. First, a cross section of the separator in the thickness direction of a separator is photographed with an electron microscope to obtain an image of the cross section. Next, any 20 positions of the spacer in the image are selected, and the heights of the spacer at these positions are measured. Then, the heights measured at the 20 positions are arithmetically averaged, and the average value obtained is taken as the average height Hs.

An area S1 of the spacer may be 30% or less of an area S0 of the separator. Within this range, a sufficient space for lithium metal deposition can be secured. Note that the area S1 and the area S0 are the areas thereof when the separator is viewed from the spacer side. A ratio S1/S0 of the area S1 to the area S0 may be 0.20 or less (20% or less) or 0.10 or less, and 0.03 or more (3% or more) or 0.05 or more.

The spacer may include a linear portion and/or a dot-shaped portion. From one point of view, the linear portion is a ridge-shaped portion. The linear portions may be mesh-shaped portions arranged in a mesh pattern. Alternatively, the spacer may include a plurality of linear portions arranged in a stripe pattern.

The planar shapes of the linear portions may be a combination of polygons. Examples of mesh shapes include shapes obtained by combining polygons such that they share edges. Polygons include triangles, quadrilaterals, hexagons, and the like. Different types of polygons may also be combined. The linear portions may have a honeycomb pattern in a plan view.

The linear portions (e.g., the mesh portion) may not be continuous, and may include missing portions. The discontinuity of the linear portions allows the spacer to more easily follow the expansion of the electrode. In addition, a plurality of linear portions arranged in a stripe pattern are also preferable because the linear portions can easily follow the expansion of the electrode.

The spacer may be formed in a pattern other than a closed mesh pattern. That is, examples of the closed mesh pattern include honeycomb patterns and lattice patterns.

The spacer may have a plurality of first linear portions and a plurality of second linear portions. The plurality of first linear portions and the plurality of second linear portions may face each other with a positive electrode or a negative electrode interposed therebetween. When a plurality of first linear portions and a plurality of second linear portions are viewed in a state where they overlap each other, each of the plurality of first linear portions may intersect at least some of the plurality of second linear portions at a plurality of positions. By causing the plurality of first linear portions and the plurality of second linear portions facing each other across an electrode to intersect each other, it is possible to inhibit spacers from fit into the space. As a result, a sufficient space between the separator and the electrode can be easily secured, and in particular, the expansion of the electrode group caused by charging and discharging can be suppressed.

(Negative Electrode)

The negative electrode includes a negative electrode base foil. In the lithium secondary battery (L), lithium metal is deposited on the negative electrode base foil during charging. Lithium metal deposited on the negative electrode base foil dissolves in the nonaqueous electrolyte as lithium ions during discharging.

The negative electrode base foil includes a negative electrode current collector foil. It is possible to use, as a material of the negative electrode current collector foil, metal materials other than lithium metal and lithium alloys. Any conductive material that does not react with lithium is preferable. More specifically, materials that do not form alloys or intermetallic compounds with lithium are preferable. Examples of such conductive materials include copper (Cu), nickel (Ni), iron (Fe), and alloys containing these metal elements. Examples of the alloys include copper alloys and stainless steel (SUS). Copper and/or copper alloys are preferable in that they have high conductivity. The thickness of the negative electrode current collector foil is not particularly limited, and may be in a range of 5 to 300 $\mu$m (e.g., in a range of 10 to 100 $\mu$m).

The negative electrode base foil may include a negative electrode current collector foil and a lithium-containing metal layer disposed on the negative electrode current collector foil. It is possible to use, as the lithium-containing metal layer, a layer containing lithium as a main component (50 atomic% or more). The lithium-containing metal layer may be a layer of at least one type selected from the group consisting of lithium metal and lithium alloys. Examples of elements other than lithium contained in lithium alloys include aluminum, magnesium, indium, and zinc. Dendritic deposition can be more effectively suppressed by providing the underlayer in advance and causing the lithium metal to be deposited thereon during charging. The thickness of the lithium-containing metal layer is not particularly limited, and may be in a range of 5 $\mu$m

to 25 μm. When the negative electrode base foil contains a lithium-containing metal layer, the lithium-containing metal layer is formed on one or both sides of the negative electrode current collector foil, depending on the configuration of the battery.

The method for forming the lithium-containing metal layer is not particularly limited. The lithium-containing metal layer may be formed by pressure-bonding a lithium-containing metal foil (a lithium metal foil or a lithium alloy foil) onto the negative electrode current collector foil. The lithium-containing metal layer is dense and thus can be distinguished from the lithium metal (generally porous) that is deposited during charging.

(Positive Electrode)

The positive electrode includes a positive electrode current collector and a positive electrode mixture layer disposed on the positive electrode current collector. The positive electrode mixture layer contains a positive electrode active material, for example, a positive electrode active material and additives (such as a conductive material and a binding agent). The positive electrode mixture layer is formed on one or both sides of a positive electrode current collector, depending on the configuration of the battery. The positive electrode can be formed using a known method. For example, first, a positive electrode mixture slurry containing a positive electrode active material and additives is prepared. Then, the positive electrode mixture slurry is applied to the positive electrode current collector and dried to form a coating film. Thereafter, the positive electrode is obtained by rolling a stacked body constituted of the positive electrode current collector and the coating film. Note that the formed positive electrode is cut to a predetermined size as needed.

The thickness Tp of the positive electrode mixture layer may be 50 μm or more or 100 μm or more, and 300 μm or less or 250 μm or less.

A material capable of reversibly absorbing and releasing lithium ions is used as the positive electrode active material. Examples of the positive electrode active material include lithium-containing transition metal oxides, transition metal fluorides, polyanions, fluorinated polyanions, and transition metal sulfides. In particular, lithium-containing transition metal oxides are preferred because they have low production costs and high average discharge voltages.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one type of transition metal element or two or more types of transition metal elements. The transition metal element may be at least one selected from the group consisting of Co, Ni, and Mn. The lithium-containing transition metal oxide may contain one or more main group elements as necessary. Examples of the main group elements include Mg, Al, Ca, Zn, Ga, Ge, Sn, Sb, Pb, and Bi.

A carbon material or the like can be used as the conductive material. Examples of the carbon material include carbon black (such as acetylene black or Ketjenblack), carbon nanotubes, and graphite.

Examples of the binding agent include fluororesin, polyacrylonitrile, polyimide resin, acrylic resin, polyolefin resin, and rubber-like polymer. Examples of the fluororesin include polytetrafluoroethylene and polyvinylidene fluoride.

It is sufficient that the positive electrode current collector is a conductive sheet. A metal foil or the like is used as the conductive sheet. A carbon material may be applied to the surface of the positive electrode current collector.

Examples of the material for the positive electrode current collector (the conductive sheet) include metal materials containing Al, Ti, Fe, and the like. The metal material may be Al, an Al alloy, Ti, a Ti alloy, an Fe alloy, or the like. The Fe alloy may be stainless steel (SUS). The thickness of the positive electrode current collector is not particularly limited, and may be in a range of 5 to 300 μm.

(Nonaqueous Electrolyte)

A nonaqueous electrolyte having lithium-ion conductivity can be used as the nonaqueous electrolyte. The nonaqueous electrolyte may be in a liquid state or a gel state. The liquid nonaqueous electrolyte can be prepared by dissolving a lithium salt in a nonaqueous solvent. When the lithium salt is dissolved in the nonaqueous solvent, lithium ions and anions are generated.

The gel nonaqueous electrolyte may contain a lithium salt and a matrix polymer, or may contain a lithium salt, a nonaqueous solvent, and a matrix polymer. As the matrix polymer, for example, a polymer material that gels by absorbing a nonaqueous solvent is used. Examples of the polymer material include fluororesin, acrylic resin, and polyether resin.

A known solvent can be used as the nonaqueous solvent. Cyclic carbonate esters, chain carbonate esters, cyclic carboxylic acid esters, chain carboxylic acid esters, chain ethers, fluorinated chain ethers, cyclic ethers, fluorinated cyclic ethers, and the like may be used as the nonaqueous solvent. Examples of the cyclic carbonate esters include propylene carbonate (PC), ethylene carbonate (EC), fluoroethylene carbonate (FEC), and vinylene carbonate (VC). Examples of the chain carbonate esters include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include ethyl acetate, methyl propionate, and methyl fluoropropionate. Examples of the cyclic ethers include 1,3-dioxolane, 4-methyl-1,3-dioxolane, tetrahydrofuran, and 2-methyltetrahydrofuran. Examples of the chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether. The nonaqueous solvents may be used alone or in combination of two or more.

Examples of lithium salts include lithium salts of chlorine-containing acids (such as $LiClO_4$, $LiAlCl_4$, $LiB_{10}Cl_{10}$), lithium salts of fluorine-containing acids (such as $LiPF_6$, $LiPF_2O_2$, $LiBF_4$, $LiSbF_6$, $LiAsF_6$, $LiCF_3SO_3$, and $LiCF_3CO_2$), lithium salts of fluorine-containing acid imides (such as $LiN(FSO_2)_2$, $LiN(CF_3SO_2)_2$, $LiN(CF_3SO_2)(FSO_2)$, $LiN(CF_3SO_2)(C_4F_9SO_2)$, and $LiN(C_2F_5SO_2)_2$), lithium halides (such as $LiCl$, $LiBr$, and $LiI$), and lithium salts containing oxalate complexes (such as $LiB(C_2O_4)_2$, $LiBF_2(C_2O_4)$, $LiPF_4(C_2O_4)$, and $LiPF_2(C_2O_4)_2$). These lithium salts may be used alone or in combination of two or more.

The concentration of a lithium salt in the nonaqueous electrolyte may be 0.5 mol/L or more, 1 mol/L or more, or 1.5 mol/L or more, and 3.5 mol/L or less, 2 mol/L or less, or 1.5 mol/L or less. An electrolyte solution having high ionic conductivity and appropriate viscosity can be obtained by setting the lithium salt concentration within the above range.

The nonaqueous electrolyte may contain an additive (e.g., a known additive). Examples of the additive include 1,3-propanesultone, methyl benzene sulfonate, cyclohexylbenzene, biphenyl, diphenyl ether, and fluorobenzene.

(Exterior Body)

The exterior body accommodates a nonaqueous electrolyte and an electrode group including spacers. The exterior body is not particularly limited, and a known exterior body can be used. The exterior body may include a battery case, and a sealing body and a gasket that seal an opening of the battery case.

Hereinafter, an example of the lithium secondary battery (L) according to this embodiment will be specifically described with reference to the drawings. The above-mentioned constituent elements can be applied to constituent elements of an exemplary lithium secondary battery described below. In addition, the constituent elements of the example described below can be changed based on the above description. Further, matters described below may be applied to the above embodiment. In addition, constituent elements that are not essential for the lithium secondary battery (L) according to the present disclosure may be omitted from the lithium secondary battery described below. In the following diagrams, the scale of the constituent elements is changed to facilitate understanding.

(Embodiment 1)

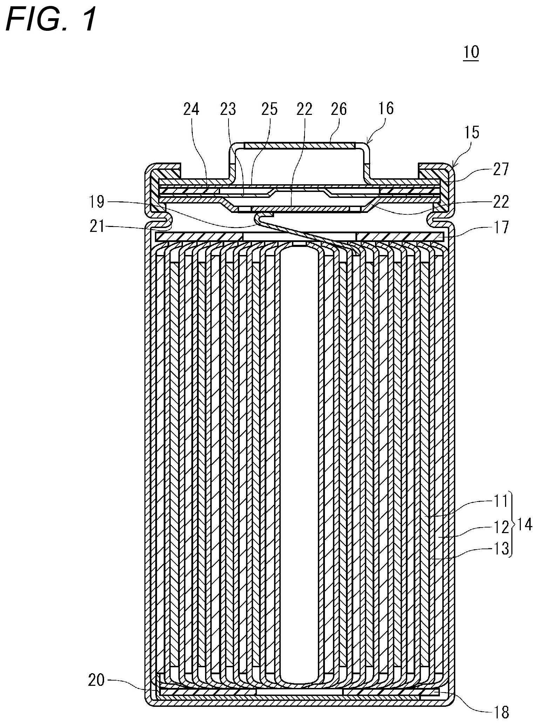

FIG. 1 is a longitudinal cross-sectional view schematically showing an example of a lithium secondary battery according to Embodiment 1. A cylindrical lithium secondary battery 10 shown in FIG. 1 includes a cylindrical battery case and an electrode group 14 and a nonaqueous electrolyte (not shown) housed in the battery case. The electrode group 14 includes a positive electrode 11, a negative electrode 12, a separator 13, and spacers. FIG. 1 does not show the spacers.

The battery case includes a case body 15, which is a bottomed cylindrical metal container, and a sealing body 16 that seals the opening of the case body 15. A gasket 27 is disposed between the case body 15 and the sealing body 16. The gasket 27 ensures the airtightness of the battery case. Insulating plates 17 and 18 are arranged inside the case body 15 on both ends in the rolling-up shaft direction of the electrode group 14. The case body 15 has a step portion 21.

The sealing body 16 includes a filter 22, a lower valve body 23, an insulating member 24, an upper valve body 25, and a cap 26. The lower valve body 23 and the upper valve body 25 are connected to each other at their respective central portions. The insulating member 24 is disposed between a peripheral edge portion of the lower valve body 23 and a peripheral edge portion of the upper valve body 25. The filter 22 and the lower valve body 23 are connected to each other at their respective peripheral edge portions. The upper valve body 25 and the cap 26 are connected to each other at their respective peripheral edge portions. All of the members that constitute the sealing body 16 except for the insulating member 24 are electrically connected to each other.

An air hole is formed in the lower valve body 23. Therefore, when the internal pressure of the battery case increases due to abnormal heat generation or the like, the upper valve body 25 bulges toward the cap 26 and separates from the lower valve body 23. As a result, the electrical connection between the lower valve body 23 and the upper valve body 25 is cut off. When the internal pressure increases further, the upper valve body 25 breaks, and gas is discharged from an opening formed in the cap 26.

The positive electrode 11 is electrically connected via a positive electrode lead 19 to the cap 26, which functions as a positive electrode terminal. The negative electrode 12 is electrically connected via a negative electrode lead 20 to the case body 15, which functions as a negative electrode terminal.

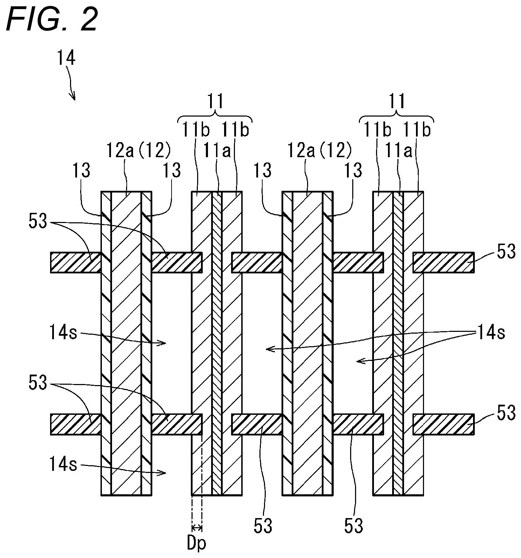

FIG. 2 is an enlarged view schematically showing a portion of an exemplary electrode group 14. The electrode group 14 includes positive electrodes 11, negative electrodes 12, separators 13, and spacers 53. Each positive electrode 11 includes a positive electrode current collector 11a and a positive electrode mixture layer 11b. FIG. 2 shows, as the negative electrode 12, a negative electrode base foil 12a on which no lithium metal is deposited. The positive electrodes 11, negative electrodes 12 and separators 13 are all band-shaped. Each spacer 53 is disposed between the positive electrode 11 and the separator 13. As described above, the spacers 53 may be formed on the separator 13. The spacers 53 form a space 14s between the positive electrode 11 and the negative electrode 12.

As shown in FIG. 2, a portion of each spacer 53 is embedded in the positive electrode mixture layer 11b. FIG. 2 shows a depth Dp to which a portion of the spacer 53 is embedded in the positive electrode mixture layer 11b.

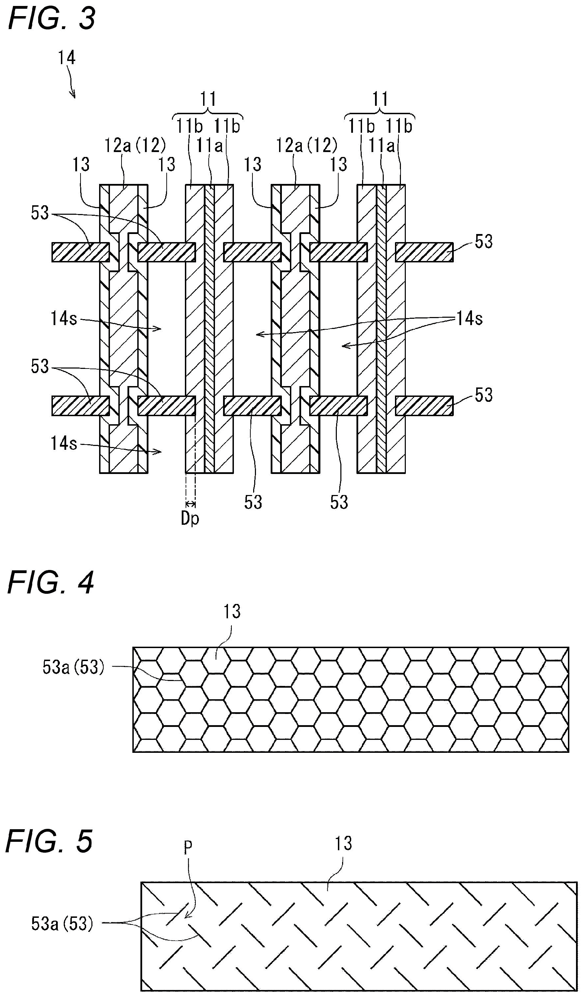

As shown in FIG. 2, the separator 13 is not embedded in the negative electrode base foil 12a. However, as shown in FIG. 3, a portion of the separator 13 that is in contact with the spacer 53 may be embedded in the negative electrode base foil 12a. In this case, a portion of the separator 13 and a portion of the spacer 53 may be embedded in the negative electrode base foil 12a.

As shown in FIGS. 2 and 3, a portion of the spacer 53 is embedded in the positive electrode mixture layer 11b. Therefore, it is possible to suppress the breakage of the film formed on the surface of the positive electrode mixture layer 11b, and as a result, it is possible to suppress deterioration of the charge/discharge cycle characteristics.

FIG. 4 shows an example of the planar shape of the spacers 53 formed on the separator 13. The spacers 53 shown in FIG. 4 are constituted of linear portions 53a. The linear portions 53a shown in FIG. 4 are arranged in a mesh pattern. More specifically, the linear portions 53a are formed in a honeycomb pattern. The honeycomb pattern is a pattern in which a plurality of hexagons are arranged such that they share edges.

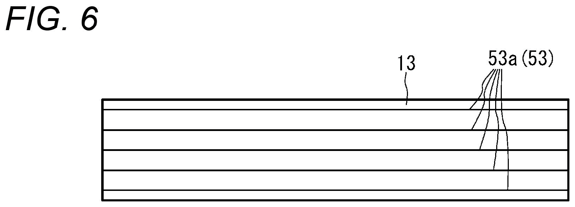

FIG. 5 shows another example of the planar shape of the spacers 53 formed on the separator 13. The spacers 53 shown in FIG. 5 include a plurality of linear portions 53a separated from each other. An interval P is present between linear portions. FIG. 6 shows another example of the planar shape of the spacers 53 formed on the separator 13. The spacer 53 shown in FIG. 6 includes a plurality of linear portions 53a arranged in a stripe pattern. In the examples shown in FIGS. 4 to 6, a region where no linear portions 53a are formed constitutes a space 14s shown in FIG. 2.

(Supplementary Notes)

The above description discloses the following technologies.

(Technology 1)

A lithium secondary battery including:

a positive electrode;
a negative electrode;
a separator and a spacer that are disposed between the positive electrode and the negative electrode; and
a nonaqueous electrolyte,
wherein the negative electrode is an electrode on which lithium metal is deposited during charging, and from which the lithium metal dissolves during discharging,
the positive electrode includes a positive electrode current collector and a positive electrode mixture layer disposed on the positive electrode current collector, and
a portion of the spacer is embedded in the positive electrode mixture layer.

(Technology 2)

The lithium secondary battery according to Technology 1, wherein an average depth to which the portion of the spacer is embedded in the positive electrode mixture layer is 0.5 $\mu$m or more.

(Technology 3)

The lithium secondary battery according to Technology 1 or 2, wherein an average depth to which the portion of the spacer is embedded in the positive electrode mixture layer is 5.0 $\mu$m or less.

(Technology 4)

The lithium secondary battery according to any one of Technologies 1 to 3, wherein the spacer is formed in a pattern other than a closed mesh pattern.

Working Examples

The lithium secondary battery (L) according to this embodiment will be specifically described below based on working examples. In Working Examples, a plurality of lithium secondary batteries were produced and evaluated.

(Battery A1)

A lithium secondary battery A1 was produced using the following procedure.

(1) Production of Positive Electrode

A lithium-containing transition metal oxide (NCA), acetylene black (AB; conductive material), and polyvinylidene fluoride (PVdF; binding agent) were mixed with a mass ratio of NCA : AB : PVdF = 95 : 2.5 : 2.5, and an appropriate amount of N-methyl-2-pyrrolidone (NMP) were added and stirred to prepare a positive electrode mixture slurry. A lithium-containing transition metal oxide containing Li, Ni, Co, and Al (a mole ratio of Li to a total of Ni, Co, and Al is 1.0) and having a layered rock salt-type crystal structure was used as the lithium-containing transition metal oxide.

Then, the obtained positive electrode mixture slurry was applied onto both sides of a band-shaped Al foil (a positive electrode current collector) and then dried to form a stacked body including a positive electrode mixture layer. Thereafter, the stacked body was rolled using a roller. Finally, the rolled stacked body was cut to a predetermined electrode size. In this manner, a positive electrode having the positive electrode current collector and the positive electrode mixture layers on both sides of the positive electrode current collector was produced. The thickness Tp of the positive electrode mixture layer on the produced positive electrode was 161 $\mu$m.

(2) Formation of Negative Electrode Base Foil

A negative electrode base foil was formed by pressure-bonding the rolled lithium metal foil (thickness: 25 $\mu$m) on both sides of a band-shaped copper foil (thickness: 12 $\mu$m).

(3) Formation of Spacer

A band-shaped porous polyethylene film (thickness: 16 $\mu$m) was prepared as a separator. Then, a coating liquid containing polyvinylidene fluoride and alumina particles (inorganic filler) was discharged onto the separator using a dispenser so as to form the pattern shown in FIG. 6. Thereafter, the coating liquid was dried in vacuum. In this manner, spacers arranged in stripes shown in FIG. 6 were formed on one side of the separator. The height of the spacer was 40 $\mu$m.

(4) Preparation of Nonaqueous Electrolyte

Ethylene carbonate (EC) and dimethyl carbonate (DMC) were mixed in a volume ratio of EC : DMC = 30 : 70. $LiPF_6$ and $LiBF_2(C_2O_4)$ were dissolved in the resulting mixed solvent at concentrations of 1 mol/L and 0.1 mol/L, respectively, to prepare a liquid nonaqueous electrolyte.

(5) Production of Electrode Group

An Al tab was attached to the positive electrode obtained above. A Ni tab was attached to the above negative electrode base foil. In an inert gas atmosphere, a rolled-up body (an electrode group) was produced by spirally rolling up the positive electrode and the negative electrode (the negative electrode base foil) with the separator interposed therebetween. Specifically, first, ends on one side of the electrode plates and the separator were held by the rolling-up shaft. At this time, the separator was arranged such that the spacers came into contact with the positive electrode. Then, the rolled-up body was formed by turning the rolling-up shaft while applying the tension shown in Table 1 to the separator.

(6) Production of Battery

The obtained electrode group was accommodated in a bag-shaped exterior body formed of a laminate sheet having an Al layer, the aforementioned nonaqueous electrolyte was injected into the exterior body accommodating the electrode group, and the exterior body was then sealed. A battery A1 (a lithium secondary battery) was produced in this manner.

(Batteries A2 to A4 and C1)

Batteries A2 to A4 and C1 were produced using the same method and under the same conditions as those for the production of the battery A1, except that the tension of the separator during the production of the rolled-up body was changed as shown in Table 1.

(1) Measurement of Embedded Depth Dp

In the batteries A1 to A4 and the battery C1, the depth Dp to which a portion of the spacer was embedded in the positive electrode mixture layer was measured. Specifically, first, the rolled-up electrode group was disassembled, and the positive electrode was taken out. Then, the embedded depth Dp at any five positions was measured using One-Shot 3D shape measuring instrument manufactured by Keyence Corporation. An average depth Dpa was obtained by arithmetically averaging the five measured depths Dp.

(2) Evaluation of Charge/Discharge Cycle Characteristics

A charging/discharging test was performed on each of the produced batteries. In the charging/discharging test, the battery was charged under the following conditions in a thermostatic chamber at 25°C, then allowed to rest for 20 minutes, and discharged under the following conditions.

(Charging)

The battery was charged with a constant current of 2.15 mA per unit area ($cm^2$) of the electrode until the battery voltage reached 4.1 V, and then was charged with a constant voltage of 4.1 V until the current value per unit area of the electrode reached 0.54 mA.

(Discharging)

The battery was discharged at a constant current of 2.15 mA per unit area of the electrode until the battery voltage reached 3.75 V.

(Calculation of Capacity Retention Rate)

In the above charging/discharging test, a discharge capacity DC(1) at 1st cycle to a discharge capacity DC(200) at the 200th cycle were measured. Then, a capacity retention rate was determined using the following equation.

$$\text{Capacity retention rate } (\%) = 100 \times DC(200) \,/\, DC(1)$$

(3) Evaluation of Discharge Characteristics

The discharge capacity $DC_{0.5C}$ at 0.5 C and $DC_{0.2C}$ at 0.2 C were measured for each of the produced batteries. Here, 1 C is one-hour rate current, which can be calculated by 1 C(A) = rated capacity (Ah) / 1(h). Then, the ratio R thereof was calculated based on the following equation.

$$\text{Ratio R}(\%) = 100 \times DC_{0.5C}/DC_{0.2C}$$

Table 1 shows some of the battery production conditions and evaluation results. The capacity retention rate is preferably. The ratio R is preferably high. A high ratio R indicates favorable high-rate discharge characteristics.

[Table 1]

| Battery | Tension during Rolling-Up (mN/mm) | Average Depth Dpa (μm) | Capacity Retention Rate (%) after 200 cycles | Discharge Characteristic Ratio R (%) |
|---|---|---|---|---|
| C1 | 1.0 | substantially zero | 89 | 100 |
| A1 | 30 | 0.5 | 91 | 100 |
| A2 | 50 | 3.0 | 92 | 100 |
| A3 | 70 | 5.0 | 92 | 99 |
| A4 | 90 | 10 | 92 | 96 |

The batteries A1 to A4 are the batteries according to the present disclosure, and the battery C1 is the battery of a comparative example. The batteries A1 to A4 had a higher capacity retention rate than the battery C1. It is conceivable that this is because breakage of the film of the positive electrode mixture layer was suppressed. As shown in Table 1, by setting the average depth Dpa to 5.0 $\mu$m or less, it was possible to suppress deterioration of the high-rate discharge characteristics.

[Industrial Applicability]

The present disclosure can be used for lithium secondary batteries.

Although the present invention has been described in terms of the presently preferred embodiments, such disclosure is not to be interpreted as limiting. Various modifications and variations will no doubt become apparent to those skilled in the art to which this invention pertains upon reading the above disclosure. It is therefore intended that the appended claims be interpreted to cover all such variations and modifications as do not depart from the true spirit and scope of the invention.

[Reference Signs List]

10: lithium secondary battery, 11: positive electrode, 11a: positive electrode current collector, 11b: positive electrode mixture layer, 12: negative electrode, 12a: negative electrode base foil, 13: separator, 14: electrode group, 14s: space, 53: spacer

**Claims**

1. A lithium secondary battery comprising:

   a positive electrode;
   a negative electrode;
   a separator and a spacer that are disposed between the positive electrode and the negative electrode; and
   a nonaqueous electrolyte,
   wherein the negative electrode is an electrode on which lithium metal is deposited during charging, and from which the lithium metal dissolves during discharging,
   the positive electrode includes a positive electrode current collector and a positive electrode mixture layer disposed on the positive electrode current collector, and
   a portion of the spacer is embedded in the positive electrode mixture layer.

2. The lithium secondary battery according to claim 1,
   wherein an average depth to which the portion of the spacer is embedded in the positive electrode mixture layer is 0.5 $\mu$m or more.

3. The lithium secondary battery according to claim 1 or 2,
   wherein an average depth to which the portion of the spacer is embedded in the positive electrode mixture layer is 5.0 $\mu$m or less.

4. The lithium secondary battery according to claim 1 or 2,
   wherein the spacer is formed in a pattern other than a closed mesh pattern.

*FIG. 1*

# FIG. 2

*FIG. 3*

*FIG. 4*

*FIG. 5*

FIG. 6

## INTERNATIONAL SEARCH REPORT

| International application No. |
|---|
| **PCT/JP2024/030432** |

**A. CLASSIFICATION OF SUBJECT MATTER**

*H01M 50/477*(2021.01)i; *H01M 10/052*(2010.01)i; *H01M 10/0565*(2010.01)i; *H01M 10/0566*(2010.01)i; *H01M 10/0585*(2010.01)i; *H01M 50/474*(2021.01)i

FI: H01M50/477; H01M50/474; H01M10/052; H01M10/0585; H01M10/0565; H01M10/0566

According to International Patent Classification (IPC) or to both national classification and IPC

**B. FIELDS SEARCHED**

Minimum documentation searched (classification system followed by classification symbols)

H01M50/477; H01M10/052; H01M10/0565; H01M10/0566; H01M10/0585; H01M50/474

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2023/054150 A1 (PANASONIC INTELLECTUAL PROPERTY MANAGEMENT CO., LTD.) 06 April 2023 (2023-04-06) <br> claims, paragraphs [0110]-[0113], [0129]-[0134], [0142]-[0143], fig. 2 | 1, 3 |
| X | WO 2022/224872 A1 (PANASONIC INTELLECTUAL PROPERTY MANAGEMENT CO., LTD.) 27 October 2022 (2022-10-27) <br> claims, paragraphs [0041], [0048]-[0050], [0057]-[0059], [0079]-[0082], fig. 4, 7 | 1, 3-4 |
| X | US 2020/0321585 A1 (ENPOWER, INC.) 08 October 2020 (2020-10-08) <br> claims, paragraphs [0051]-[0057], [0068], fig. 2, 3 | 1-4 |
| A | WO 2022/045127 A1 (PANASONIC INTELLECTUAL PROPERTY MANAGEMENT CO., LTD.) 03 March 2022 (2022-03-03) | 1-4 |
| A | JP 2019-212603 A (PANASONIC INTELLECTUAL PROPERTY MANAGEMENT CO., LTD.) 12 December 2019 (2019-12-12) | 1-4 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 November 2024** | **19 November 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/030432**

| Patent document cited in search report | | | Publication date (day/month/year) | Patent family member(s) | | | Publication date (day/month/year) |
|---|---|---|---|---|---|---|---|
| WO | 2023/054150 | A1 | 06 April 2023 | EP | 4411915 | A1 | |
| | | | | claims, paragraphs [0111]-[0114], [0131]-[0135], [0144]-[0145], fig. 2 | | | |
| | | | | CN | 118044022 | A | |
| WO | 2022/224872 | A1 | 27 October 2022 | US | 2024/0194951 | A1 | |
| | | | | claims, paragraphs [0048], [0055]-[0057], [0064]-[0066], [0087]-[0090], fig. 4, 7 | | | |
| | | | | EP | 4329044 | A1 | |
| | | | | CN | 117121262 | A | |
| US | 2020/0321585 | A1 | 08 October 2020 | US | 2022/0278424 | A1 | |
| | | | | WO | 2020/206265 | A1 | |
| | | | | CN | 113939950 | A | |
| | | | | CN | 117558861 | A | |
| WO | 2022/045127 | A1 | 03 March 2022 | US | 2023/0361431 | A1 | |
| | | | | EP | 4207413 | A1 | |
| | | | | CN | 115885404 | A | |
| JP | 2019-212603 | A | 12 December 2019 | US | 2019/0372152 | A1 | |
| | | | | EP | 3576198 | A1 | |
| | | | | CN | 110556541 | A | |

Form PCT/ISA/210 (patent family annex) (July 2022)

**REFERENCES CITED IN THE DESCRIPTION**

**Patent documents cited in the description**

- JP H10199812279 A

- JP 2020066254 A